# EUROPEAN PATENT SPECIFICATION

(11) **EP 2 928 045 B1**
(45) Date of publication and mention of the grant of the patent: **07.08.2019**
(21) Application number: 15160224.0
(22) Date of filing: 23.03.2015
(51) Int. Cl.: H02J 9/00, H05B 37/02

(54) **Assembly for adding functionality to an electrical load in an electrical installation, power supply restoration module and control module for use in such an assembly, and an electrical installation comprising such an assembly**
ANORDNUNG ZUM HINZUFÜGEN EINER FUNKTIONALITÄT ZU EINER ELEKTRISCHEN LAST IN EINER ELEKTRISCHEN INSTALLATION, STROMVERSORGUNGSWIEDERHERSTELLUNGSMODUL UND STEUERMODUL ZUR VERWENDUNG IN SOLCH EINER ANORDNUNG SOWIE ELEKTRISCHE INSTALLATION MIT SOLCH EINER ANORDNUNG
ENSEMBLE PERMETTANT D'AJOUTER UNE FONCTIONNALITÉ À UNE CHARGE ÉLECTRIQUE DANS UNE INSTALLATION ÉLECTRIQUE, MODULE DE RESTAURATION D'ALIMENTATION ET MODULE DE COMMANDE DESTINÉ À ÊTRE UTILISÉ DANS UN TEL ENSEMBLE, ET INSTALLATION ÉLECTRIQUE COMPRENANT UN TEL ENSEMBLE

(30) Priority: 01.04.2014 BE 201400225
(43) Date of publication of application: 07.10.2015
(73) Proprietor: Niko NV, 9100 Sint-Niklaas (BE)
(72) Inventor: Tiels, Koen Reinout Roeland, 9100 Sint-Niklaas (BE); Devenyn, Diederik Jo, 9820 Merelbeke (BE)
(74) Representative: D'Halleweyn, Nele Veerle Trees Gertrudis

(56) References cited:
- US-A1- 2008 024 074

## Description

### Technical field of the invention

The present invention relates to an assembly for adding at least one functionality to an electrical load in an electrical installation. In particular, the present invention provides an assembly that is adapted for restoring the electrical power supply of a control module of the assembly in case of a power supply interruption as a result of operating a switch in a set of supply lines to the electrical load. In addition, the invention relates to a power supply restoration module for use in such an assembly, to a control module for use in such an assembly, and to an electrical installation comprising such an assembly.

### Background of the invention

In existing electrical installations, it is mostly desirable to add control modules to an electrical load such as, for example, a lighting element, a heating element, a ventilation element, a roller shutter, etc. Such control modules are intended to add additional functionalities, also called "smart" functionalities, to the electrical load. Such additional functionalities may, for example, be energy control, measuring the consumption of the electrical load, visualization of for example consumption, dim functionality, thermostat functionality, wireless communication for exchanging data and for operating the electrical load, etc. Such a control module should preferably be provided with power supply together with the associated electrical load through the same set of power supply lines.

In existing electrical installations, mechanical or user-operated switches such as alternating or two-way switches and/or crossbar or four-way switches are present which interrupt the power supply of an electrical load when such switch is placed in the "OFF" position. A problem hereof is that, when placing a mechanical or user-operated switch in the "OFF" position, this would mean that also the control module is no longer provided with power supply at that time, unless the control module is provided with a relatively large energy buffer such as a battery or unless this takes place via so-called energy harvesting.

US 2008/0024074 describes a load control device for use with lighting circuits having three-way switches. More particularly, this document describes a dimmer switch that can be substituted for a four-way switch, a line-side three-way switch or a load-side three-way switch in lighting circuits having either two or more points of control, such as, for example, a four-way system. A lighting control system comprises a smart three-way dimmer switch according to the invention. The dimmer switch and a standard three-way switch are connected in series between an AC voltage source and a lighting load. The smart three-way dimmer switch comprises two bidirectional semiconductor switches. The dimmer switch includes a controller that is coupled to gate drive circuits to control the two semiconductor switches. The controller is operable as to control the intensity of the lighting load. A power supply generates a DC voltage to power the controller. The power supply will draw current through a first dimmed hot terminal when the standard three-way switch is in a first position and through a second dimmed hot terminal when the standard three-way switch is in a second position. The power supply is able to charge when the two semiconductor switches are both not conducting and there is a voltage potential developed across the dimmer.

### Summary of the invention

The purpose of the present invention is to provide an assembly that allows the addition of at least one functionality to an electrical load thereby making sure that by doing so, a control module can continuously or substantially continuously be provided with power supply, such that no or only a limited energy buffer is required.

According to a first aspect of the invention, an assembly is provided for adding at least one functionality to an electrical load. The assembly comprises a control module adapted for adding a functionality to the electrical load. The control module comprises a first, electronically controlled switch for being provided between the electrical load and a branch point, the branch point being intended for connecting with a set of power supply lines for providing power supply to the control module and the electrical load. The assembly furthermore comprises a power supply restoration module for restoring the power supply of the control module in the event of a power supply interruption as a result of a switching operation of a user-operated switch in the set of power supply lines towards the electrical load. The power supply restoration module comprises a second electronically controlled switch for being provided in the set of power supply lines. Still further, the assembly comprises a control circuit for detecting a power supply interruption in the set of power supply lines, and to, upon detecting a power supply interruption, switch the first switch and to, after switching the first switch, switch the second switch.

With electronically controlled switch is meant a switch in an electrical circuit which is controlled by electronics, such as for example as a result of an "event" in the circuit.

It has also to be noted that adding a functionality to an electrical load may also imply that another functionality already present, is removed.

When an existing user-operated switch in the set of power supply lines that runs to the electrical load is placed in the "OFF" position by a user, this means when for example a user-operated switch for controlling a lamp is placed in the "OFF" position, then the control circuit will detect a power supply interruption in the set of power supply lines. In case of such a power supply interruption detection, first the first electronically controlled switch will be switched as a result of which the electrical load is no longer electrically connected with the branch point, and no power supply will be provided to the electrical load any more. Shortly after the first switch has been switched, the second electronically controlled switch will be switched so that power supply can again be provided through the branch point. In that way, the control module can again be provided with power, without providing power supply to the electrical load. When the user-operated switch in the set of power supply lines to the electrical load is placed in the "ON" position again, the control circuit will again detect a power supply interruption, after which initially the first electronically controlled switch and subsequently the second electronically controlled switch will be switched. In that way, the electrical load and the control module will again be supplied with power.

An important advantage of an assembly according to embodiments of the invention is that no communication is required between the control module and the power supply restoration module. In other words, in an assembly according to this invention, the control module and the power supply restoration module work independently from each other.

According to embodiments of the invention, the assembly may comprise a control module that is adapted to add the functionality to the electrical load and which includes a first, electronically controlled switch, the first switch being intended for being provided between the electrical load and a branch point in the control module, such branch point is intended for connection with a set of power supply lines for providing power supply to the control module and to the electrical load. Furthermore, the assembly may comprise a second, electronically controlled switch for being provided in the set of power supply lines, upstream of the control module. The second, electronically controlled switch is for being provided in the set of power supply lines at another side of the branch point than the first switch. The assembly may furthermore comprise a control circuit adapted to detect a power supply interruption in the set of power supply lines, and to, in case of detecting such a power supply interruption, switch the first electronically controlled switch, and to, after having switched the first electronically controlled switch, switch the second electronically controlled switch.

According to particular embodiments, the present invention provides an assembly for restoring the electrical power supply of a control module of an electrical load, in case of a power supply interruption as a result of a switching of a user-operated switch in a set of power supply lines. The assembly comprises a first electronically controlled switch for being provided between the electrical load and a branch point in the control module, the branch point being intended for connecting to a set of power supply lines for providing power supply to the control module and the electrical load, and a second electronically controlled switch for being provided in the set of power supply lines upstream of the control module. Furthermore, the assembly comprises a control circuit which is adapted to detect a power supply interruption in the set of power supply lines and, in case of detecting such a power supply interruption, to switch the first electronically controlled switch, and to, after having switched the first electronically controlled switch, switch the second electronically controlled switch.

The second switch can, for example, be an alternating or two-way switch or a crossbar or four-way switch. According to the location and nature of the set of power supply lines, preference shall be given to an alternating or two-way or a crossbar or four-way switch. This will immediately be clear to a person skilled in the art and will be clear from the embodiments described in the figures, see further.

According to embodiments of the invention, the control module may preferably be adapted to communicate wirelessly and/or to be part of a wireless network; and/or to store data involving the energy consumption of the electrical load; and/or to measure energy consumption of the electrical load.

According to one type of embodiments, the power supply restoration module may be intended to be provided at a certain distance from the control module, whereby the power supply restoration module and the control module are provided as separate modules. According to these embodiments, the control circuit may comprise a first circuit adapted to detect a power supply interruption in the set of power supply lines, and to, upon detection of such power supply interruption, switch the first switch. The first circuit may, together with the first switch, be provided in the control module. Furthermore, the control circuit may comprise a second circuit adapted to detect a power supply interruption in the set of power supply lines and to, upon detection of such power supply interruption, switch the second switch. This second circuit may, according to the present embodiments, together with the second switch be provided in the power supply restoration module.

According to other embodiments, the second circuit may be adapted to work together with a user-operated switch for causing switching of the second switch when switching this user-operated switch. This user-operated switch can be a part of an existing button for switching on or switching off the electrical load and the power supply restoration module is then preferably adapted to co-operate with this user-operated switch.

According to other embodiments of the invention, the control module and the power supply restoration module may be incorporated into one control-restoration module. In other words, according to such embodiments, the control module and the power supply restoration module are not implemented as two separate modules, but they are integrated in one and the same module. According to these embodiments, the power supply restoration module is not provided at a distance of the control module but the control module, the power supply restoration module and the control circuit are incorporated into one single control-restoration module intended for being provided at the location of the electrical load.

The control circuit may preferably comprise a power supply interruption-detection circuit and a control. The power supply interruption-detection circuit may be adapted to detect a power supply interruption in the set of supply lines. The control may be adapted to, upon detecting a power supply interruption, switch the first switch, and to, after switching the first switch, switch the second switch. The second switch may preferably have a first and a second input clamp which are intended to be connected to two electric wires of an existing alternating switch or crossbar switch for operating the electrical load. In addition, the second switch may further have an output clamp. The first switch may have an input and an output clamp. The output clamp of the second switch is, on the one hand, connected to a supply input of the control and, on the other hand, to the input clamp of the first switch, with insertion of the power supply interruption-detection circuit. According to particular embodiments of the invention, the control module may comprise a display screen to display data to a user.

In a second aspect, the invention furthermore relates to a control module for use in an assembly according to embodiments of the invention as described above. The control module comprises a first electronically controlled switch for being provided in a power supply line of a set of power supply lines for providing power supply to the control module, between an electrical load and a branch point. According to particular embodiments of the invention, the control module may furthermore comprise a first circuit that is part of a control circuit and that is adapted to detect a power supply interruption in the set of power supply lines and to, upon detection of such a power supply interruption, switch the first electronically controlled switch.

In addition, the invention also relates to a power supply restoration module for use in an assembly according to embodiments of the invention as described above. The power supply restoration module comprises a second electronically controlled switch for being provided in a set of power supply lines for providing power supply to a control module. According to particular embodiments, the power supply restoration module may furthermore comprise a second circuit that is part of a control circuit and which is adapted to detect a power supply interruption in the set of power supply lines and to switch the second electronically controlled switch upon detection of such a power supply interruption.

In a further aspect, the invention provides an electrical installation comprising a set of power supply lines that lead to an electrical load, one or more user-operated switches, typical alternating switches or crossbar switches, provided in the set of power supply lines; and an assembly according to embodiments of the inventions as described above, whereby a first, electronically controlled switch that is part of a control module is provided in a power supply line of the set of power supply lines for providing power supply to the control module, between the electrical load and a branch point; and a second, electronically controlled switch that is part of a power supply restoration module that is positioned in the set of power supply lines, and a control circuit that is provided and adapted to detect a power supply interruption in the set of power supply lines, and to, upon detection of such a power supply interruption, switch the first switch, and to, after the first switch has been switched, switch the second switch.

According to particular embodiments of the invention, the control module and the power supply restoration module may be provided as two separate modules. According to other embodiments of the invention, the control module and the power supply restoration module may be integrated in one and the same module.

### Brief description of the drawings

The present invention will be further explained by means of a number of non-limiting examples of embodiments while referring to the drawings in attachment, wherein:
Figures 1A and 1B schematically illustrate an implementation of a control module and a power supply restoration module according to embodiments of the invention;
Figures 2A and 2B illustrate examples of an existing electrical installation with at least one switch and an electrical load;
Figures 3A and 3B schematically illustrate an assembly according to an embodiment of the invention;
Figures 4A to 4D schematically illustrate the principle of an assembly and an electrical installation according to an embodiment of the invention;
Figure 5 schematically illustrates a detailed embodiment of a power supply restoration module according to an embodiment of the invention;
Figure 6 schematically illustrates another detailed embodiment of a power supply restoration module according to an embodiment of the invention;
Figure 7 schematically illustrates a further embodiment of a power supply restoration module according to an embodiment of the invention; and
Figure 8 schematically illustrates an embodiment of a control-restoration module according to an embodiment of the invention in which the control module and the power supply restoration module are provided in one and the same module.

### Description of illustrative embodiments

In the description different embodiments will be used to describe the invention. Therefore reference will be made to different drawings. It has to be understood that these drawings are intended to be non-limiting, the invention is only limited by the claims. The drawings are thus for illustrative purposes only, the size of some of the elements in the drawings may be exaggerated for clarity purposes.

The term "comprising" is not to be interpreted as limiting the invention in any way. The term "comprising", used in the claims, is not intended to be restricted to what means is described thereafter; it does not exclude other elements, parts or steps.

The term "connected" as used in the claims and in the description has not to be interpreted as being restricted to direct connections, unless otherwise specified. Thus, part A being connected to part B is not limited to part A being in direct contact to part B, but also includes indirect contact between part A and part B, in other words also includes the case where intermediate parts are present in between part A and part B.

Not all embodiments of the invention comprise all features of the invention. In the following description and claims, any of the claimed embodiments can be used in any combination.

The present invention provides an assembly for adding at least one functionality to an electrical load. The assembly comprises a control module adapted for adding a functionality to the electrical load. The control module comprises a first electronically controlled switch for being provided downstream of a branch point, between the electrical load and the branch point, the branch point being intended for connecting with a set of power supply lines for providing power supply to the control module and the electrical load. The assembly furthermore comprises a power supply restoration module for restoring the power supply of the control module in the event of a power supply interruption as a result of a switching operation of a user-operated switch in the set of power supply lines towards the electrical load. The power supply restoration module comprises a second electronically controlled switch for being provided in the set of power supply lines. Furthermore, the assembly comprises a control circuit for detecting a power supply interruption in the set of power supply lines, and to, upon detecting such a power supply interruption, switch the first switch, and to, after switching the first switch, switch the second switch.

It is to be noted that adding a functionality to an electrical load may also imply that another functionality already present is removed.

Examples of functionalities for the electrical load may, for example, be energy control, measuring the consumption of the electrical load, visualization of for example consumption, dim functionality, thermostat functionality, wireless communication for exchanging data and for operating the electrical load, etc.

An important advantage of an assembly according to embodiments of the present invention is that no communication is required between the control module and the power supply restoration module. In other words, in an assembly according to embodiments of the invention, the control module and the power supply restoration module operate fully independent or substantially fully independent from each other.

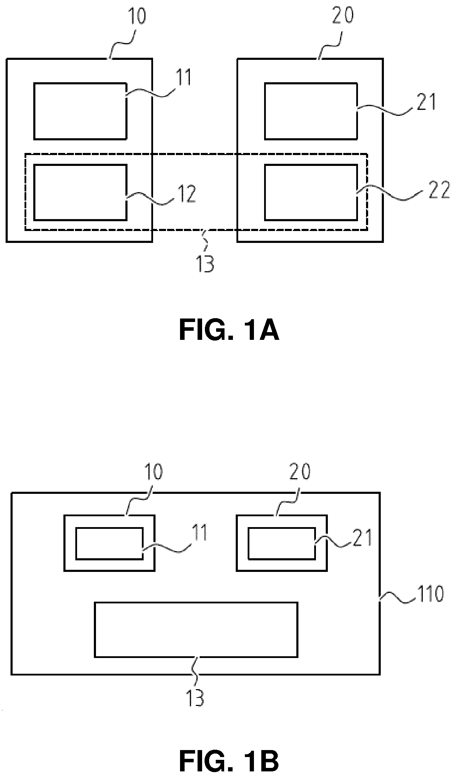

In the assembly according to different embodiments of the invention, the control module and the power supply restoration module may be provided either as two different, separate modules or they may be provided in one and the same module. For clarity reasons only, this is schematically illustrated in figures 1A and 1B. For simplicity no other parts of the assembly according to the invention are shown in figures 1A and 1B. Figure 1A illustrates the case in which the control module 10 and the power supply restoration module 20 are provided as two different modules. According to this example, the control module 10 may comprise a first, electronically controlled switch 11 and the power supply restoration module 20 may comprise a second electronically controlled switch 21. With electronically controlled switch is meant a switch in an electrical circuit which is controlled by electronics, such as for example which is controlled as a result of an "event" in the circuit, e.g. switching another switch in the circuit. Furthermore, a control circuit 13 is provided which, according to illustrated embodiment in figure 1A, comprises a first part or circuit 12 that is provided in the control module 10 and a second part or circuit 22 that is provided in the power supply restoration module 20.

In figure 1B an embodiment is schematically illustrated in which the control module 10 and the power supply restoration module 20 are implemented in one and the same module, namely the control-restoration module 110. Also in this case, the control module 10 may comprise a first, electronically controlled switch 11 and the power supply restoration module 20 may comprise a second, electronically controlled switch 21. According to this embodiment, the control circuit 13 does not comprise parts that are part of the control module 10 and the power supply restoration module 20 itself, as was the case in the embodiment illustrated in figure 1A, but is formed as a separate part, i.e. as a part different from the control module 10 and the power supply restoration module 20.

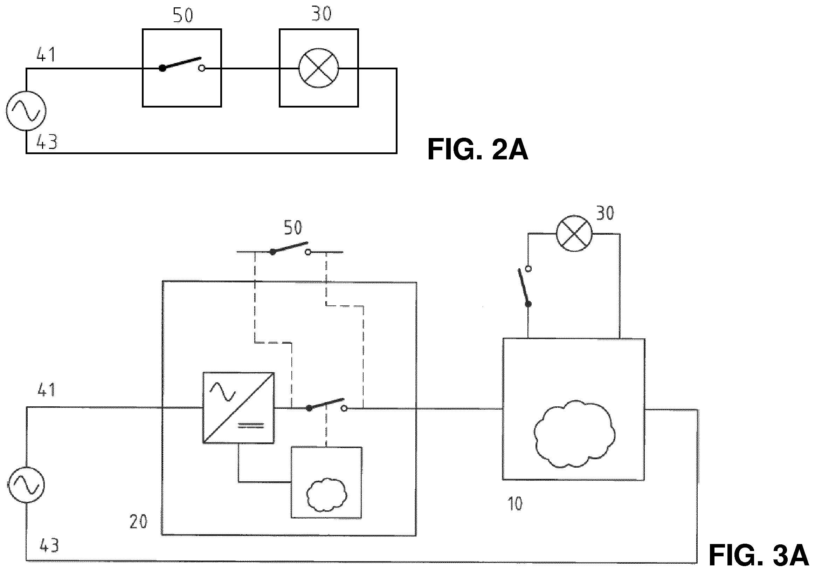

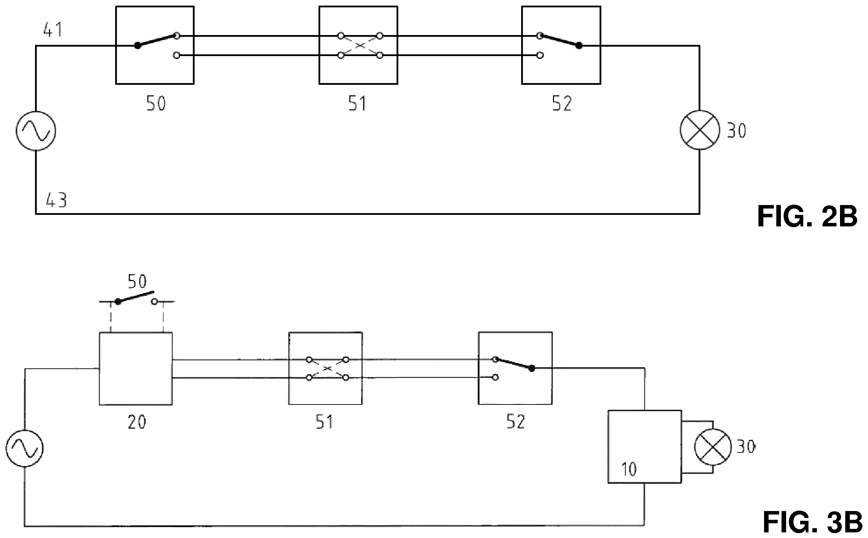

Figures 2A and 2B illustrate examples of an electrical installation to which the present invention can be applied. Such an electrical installation may comprise at least one user-operated switch 50, 51, 52 and an electrical load 30, such as for example a lighting element, a heating element, a ventilation element, a roller blind, etc. The invention can be applied to any electrical installation, as soon as this electrical installation comprises one user-operated switch and an electrical load. Figure 2A illustrates such a minimalistic electrical installation which comprises one user-operated switch 50 and an electrical load, in this case, a lamp 30. In addition, the electrical installation comprises a set of power supply lines 41, 43 for providing power supply to the lamp 30. In other cases, the electrical installation can be more extended than the one illustrated in figure 2A and can, for example, comprise a plurality of user-operated switches 50, 51, 52 and/or a plurality of electrical loads 30. Figure 2B illustrates an example hereof. In this example, the electrical installation comprises three user-operated switches 50, 51, 52 and an electrical load, also a lamp 30 in this example. The user-operated switches 50, 51, 52 can be implemented as alternating switches and/or as crossbar switches.

When it is necessary to add extra "smart" functionality to the electrical load, in the present examples of figure 2A and 2B where the electrical load is a lamp 30 for example a dim functionality, according to the invention a control module 10 will be provided to add this functionality to the lamp 30. As is schematically illustrated in figures 3A and 3B, this control module 10 is positioned at the location of the lamp 30. To make sure that, in the event of a power interruption in one of the power supply lines 41, 43, the control module 10 is further provided with power supply, according to the invention, also a power supply restoration module 20 is provided. This power supply restoration module 20 is positioned at the location of one of the user-operated switches 50, 51 or 52 present in the electrical installation, in the example give at the location of user-operated switch 50.

An important advantage of an assembly according to embodiments of the invention is that no communication is required between the control module 10 and the power supply restoration module 20. In other words, in an assembly according to embodiments of the invention, the control module 10 and the power supply restoration module 20 operate independent or substantially independent from each other.

An assembly according to embodiments of the invention is especially beneficial for retrofit solutions. With retrofit solutions is meant, the adjustment or upgrading of existing electrical installations in an existing home. However, a person skilled in the art will understand that the use of the invention is not limited to such existing installations but that an assembly according to embodiments of the invention can be used as well for new electrical installations and thus for newly constructed homes.

Hereinafter the invention will be described in detail by means of different embodiments. Such embodiments are only for the ease of explanation and are not intended to limit the invention in any way.

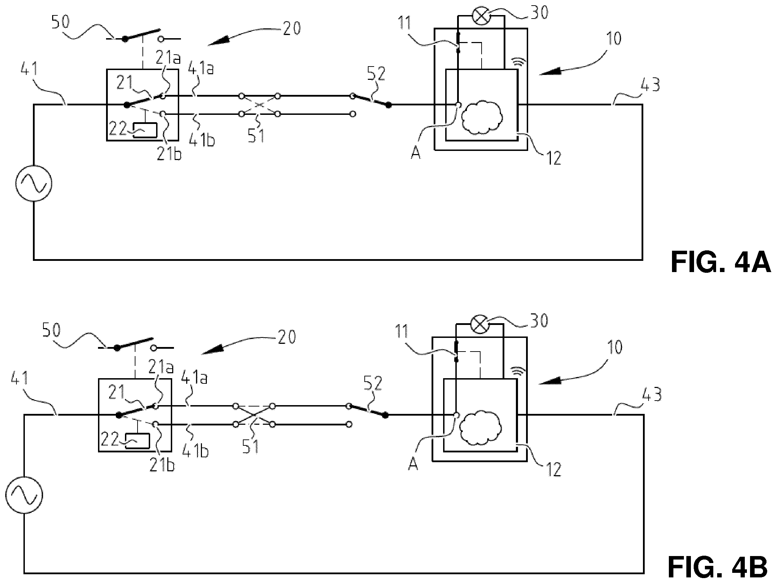

Figures 4A-4D illustrate the principle of the invention by means of a schematically illustrated embodiment of an electrical installation with a set of power supply lines 41, 43 for providing power supply to an electrical load 30, for example, a lamp. In the set of power supply lines 41, 43, according to the present embodiment, three user-operated switches 50, 51, 52 are provided for turning the lamp 30 "on" and "off'. These user-operated switches 50, 51, 52 can be implemented as crossbar switches, alternating switches or a combination thereof. As already mentioned before, the electrical installation does not have to comprise exactly three user-operated switches but can comprise as many user-operated switches as required. At the location of the lamp 30, a control module 10 is provided in which so-called "smart" functionalities are incorporated. For example, the control module 10 can be adapted to check the energy consumption and/or to carry out measurements of the energy consumption and/or to communicate wireless so as to regulate operation of the electrical load 30 from a distance, to provide the electrical load 30 with a dim function and/or any other functionality which may be assigned to an electrical load 30 as known by a person skilled in the art. In the embodiment illustrated in figure 4A, the control module 10 and the electrical load 30 are provided with power via the power supply lines 41, 43.

Whenever a user operates switch 50, 51 or 52, it is desirable to switch off the electrical load 30, i.e. to no longer provide power supply to the electrical load 30. However, the control module 10 has further to be provided with power supply. To make this possible, according to the illustrated embodiment, a first switch 11 and a first circuit 12 are incorporated in the control module 10, and a power supply restoration module 20 comprising a second switch 21 and a second circuit 22 which is adapted for controlling the second switch 21 is provided in the set of power supply lines 41, 43. The first switch 11 is positioned downstream of a branch point A for providing power supply to the control module 10, between the electrical load 30 and the branch point A. The first and second switches 11, 21 are added respectively to the control module 10 and the power supply restoration module 20, and are typically electronically controlled switches. The second switch 21 is positioned in the set of power supply lines 41, 43 upstream from branch point A. In other words, the second switch 21 is provided in the set of power supply lines 41, 43 at another side of branch point A than the first switch 11. According to the present embodiment, the control module 10 and the power supply restoration module 20 are implemented as two separate modules and they are positioned at a certain distance from each other in the electrical installation. The assembly furthermore comprises a control circuit. The control circuit comprises, according to the present embodiment, a first circuit 12 and a second circuit 22 which are adapted for detecting a power supply interruption in the set of power supply lines 41, 43 and which are positioned respectively in the control module 10 and in the power supply restoration module 20. In other words, according to the present embodiment, the control circuit comprises a first part or first circuit 12 that is part of the control module 10 and a second part or second circuit 22 that is part of the power supply restoration module 20. Furthermore, the first circuit 12 and the second circuit 22 are adapted to, upon detecting a power supply interruption, first switch the first switch 11 and subsequently switch the second switch 21.

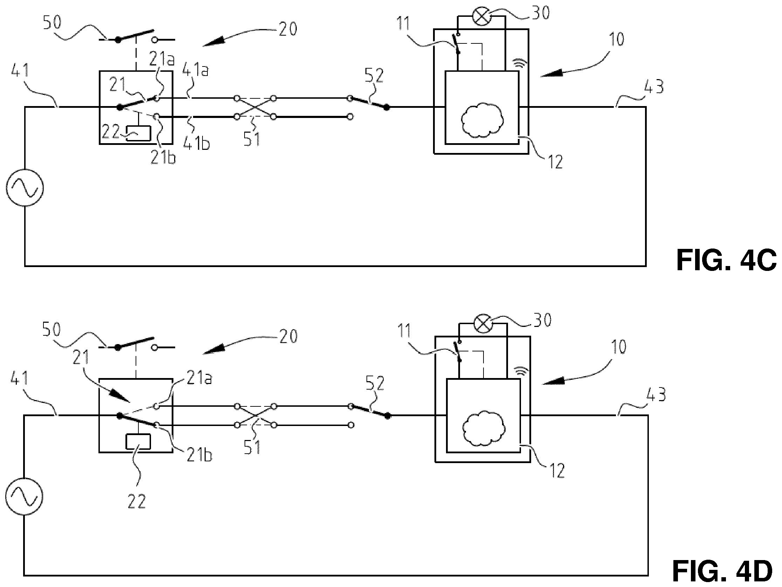

In the example given, it is assumed that a user is operating switch 51 to interrupt the power supply to the electrical load 30, see figure 4B. In response to this, the first circuit 12 in the control module 10 will detect this power supply interruption and will open the first switch 11, see figure 4C. Then, the second circuit 22 will also detect the power supply interruption and will take care of switching the second switch 21, shortly after the first switch 11 has been switched, see figure 4D. As a result hereof, the control module 10 will continue to be provided with power supply while no power flows towards the electrical load 30.

When again one of the switches 50, 51, 52 is operated by a user to provide power supply to the electrical load 30, then in a similar way the first switch 11 will be closed first, after which also the second switch 21 will be again switched. In this way, it is made sure that the control module 10 will substantially continuously be provided with power supply. According to embodiments of the invention, for the short periods during switching when the control module 10 is no longer provided with power supply, a small power buffer (not shown) may be provided in the control module 10. This power buffer may serve to bridge very short periods of time. For similar reasons a small power buffer (not shown either) may be provided in the power supply restoration module 20.

Hence, the power supply restoration module 20 may preferably be adapted to co-operate with one of the user-operated switches 50, 51, 52 for producing a switching operation of the second switch 21 when operating one of these user-operated switches 50, 51, 52. The power supply restoration module 20 can be simply incorporated at the location of one of these user-operated switches 50, 51, 52. These user-operated switches 50, 51, 52 can for example be a part of an existing electrical installation.

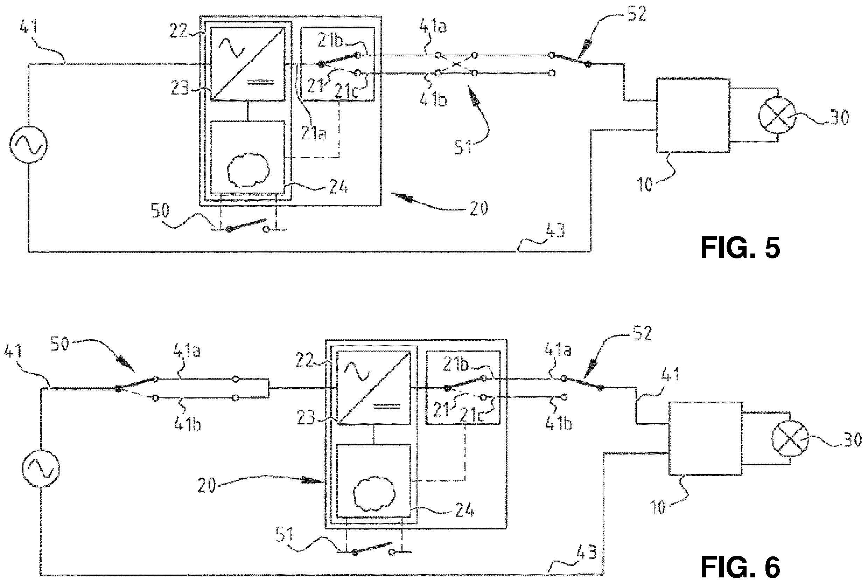

Figure 5 illustrates in greater detail a possible embodiment of a power supply restoration module 20 that is provided in a set of power supply lines 41, 41a, 41b, 43 in which furthermore user-operated switches 50, 51, 52 are provided. For this example, the control module 10 will not be discussed any more in detail since a person skilled in the art understands that it can be implemented as discussed in the earlier embodiment described above. According to the present embodiment, the power supply restoration module 20 may be positioned at the location of a user-operated switch 50. The power supply restoration module 20 comprises a second, electronically controlled switch 21 and a second circuit 22. The second circuit 22 comprises a power supply interruption-detection circuit 23, in which typically an AC/DC converter may be provided, and a control 24. The control 24 is adapted to switch the second electronically controlled switch 21 when the power supply interruption-detection circuit 23 has detected a power supply interruption. The second switch 21 is added in the power supply lines 41, 41a, 41b. The second switch 21 has two outputs 21b, 21c which are respectively connected with wires 41a, 41b which run towards a user-operated switch 51. Input 21a of the second switch 21 is connected to the incoming wire 41 with insertion of the power supply interruption-detection circuit 23, or in other words, the power supply interruption-detection circuit 23 is located in between the incoming wire 41 and the input 21a of the second switch. When one of the switches 51, 52 is switched, the power supply interruption-detection circuit 23 detects a power supply interruption and the second switch 21 is switched after a first switch in the control module 10 has been switched as was described for the embodiment of figures 4A-4D.

Figure 6 illustrates another embodiment of the power supply restoration module 20 in which the power supply restoration module 20 is provided between a first user-operated switch 50 and a second user-operated switch 52, and at the location of a third user-operated switch 51. The power supply restoration module 20 is similar to the power supply restoration module in the embodiment of figure 5, but is now incorporated in a different way in the set of power supply lines 41, 41a, 41b, 43. The incoming power supply wires 41a, 41b are both connected to the power supply interrupt-detection circuit 23, and the outputs 21b, 21c of the second switch 21 are respectively connected to the output wires 41a, 41b. When switch 50 is switched, there will be a power supply interruption for a short period of time that will be detected by the power supply interruption-detection circuit 23, because of which first the first switch 11 in the control module 10 will switch, after which the second switch 21 is switched by the control 24. Also here is thus taken care of restoring the power supply to the control module 10 at the time that one of the switches 50, 51, 52 is switched.

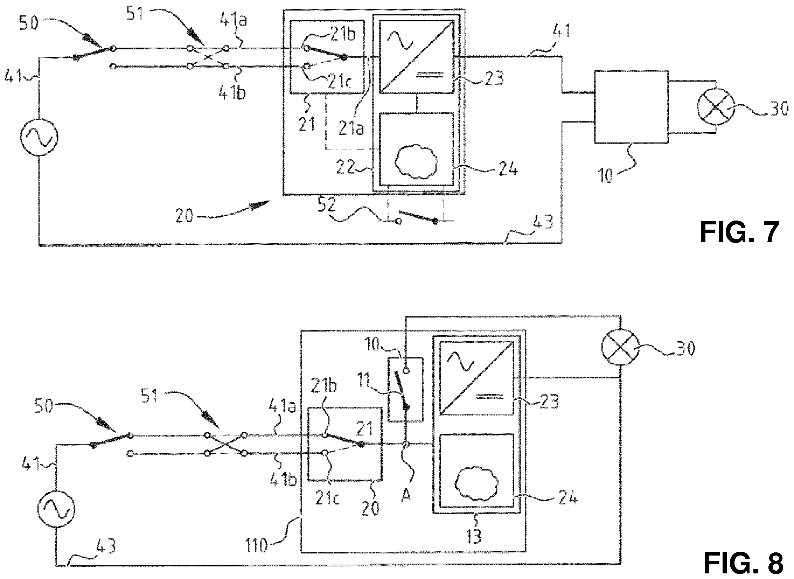

Figure 7 illustrates yet another embodiment of a power supply restoration module 20. According to this embodiment, the power supply restoration module 20 is provided in between a user-operated switch 51 and the control module 10, and at the location of a user-operated switch 52. According to this embodiment, the power supply interruption-detection circuit 23 is located downstream from the second switch 21. Further, two inputs 21b, 21c of the second switch 21 are respectively connected to power supply wires 41a, 41b which lead to switch 51. The output 21a of the second switch 21 is, with insertion of the power supply interruption-detection circuit 23 connected to an input of the control module 10, or in other words, the power supply interruption-detection circuit 23 is located in between the output 21a of the second switch 21 and the input of the control module 10. Also here a power supply interruption as a result of switching one of switches 50, 51, 52 will be detected by the power supply interruption-detection circuit 23, whereby, after switching the first switch 11 in the control module 10, the second switch 21 is switched by the control 24.

Figure 8 illustrates a further embodiment of an assembly according to the invention whereby the control module 10 and the power supply restoration module 20 are provided in one and the same module, hereinafter referred to as control-restoration module 110. According to this embodiment the control-restoration module 110 may comprise a control module 10 comprising a first, electronically controlled switch 11 and a power supply restoration module 20 comprising a second, electronically controlled switch 21. The first switch 11 is provided in a power supply line running to the electrical load 30, downstream of a branch point A for providing power supply to the control module 10, between the electrical load 30 and the branch point A. The second switch 21 is provided in the set of power supply lines 41, 43 upstream of the branch point A and thus at the other side of branch point A than the first switch 11. The second switch 21 is adapted to switch between a first power supply wire 41a and a second power supply wire 41b. In the example given, these power supply wires 41a, 41b run to a user-operated switch 51 which is intended to serve the electrical load 30. According to this embodiment, a control circuit 13 is further provided which comprises a power supply interruption-detection circuit 23 and a control 24. Upon detection of a power supply interruption by the power supply interruption-detection circuit 23, a signal is transmitted to the control 24 which in turn controls the second switch 21 and the first switch 11. This control is such that the first switch 11 is switched first, after which the second switch 21 is switched. In this way it is made sure that a power supply interruption at the location of the branch point A is only short in duration when operating one of the switches 50, 51.

The present invention is not limited to the exemplary embodiments illustrated above and a person skilled in the art will understand that many modifications can be thought of within the framework of the invention that is solely defined by the claims hereinafter.

## Claims

1. Assembly for adding at least one functionality to an electrical load (30), the assembly comprising:
- a control module (10) adapted for adding a functionality to the electrical load (30), the control module (10) comprising a first switch (11) provided between the electrical load (30) and a branch point (A), the branch point (A) being intended for connecting with a set of power supply lines (41, 43) for providing power supply to the control module (10) and the electrical load (30);
- a power supply restoration module (20) configured to restore
the power supply of the control module (10) in the event of a power supply interruption as a result of a switching operation of a user-operated switch (50, 51, 52) in the set of power supply lines (41, 43) towards the electrical load (30); and
- a control circuit (13) configured to detect a power supply interruption in the set of power supply lines (41, 43),
**characterized in that** the power supply restoration module (20) comprises a second switch (21) provided in the set of power supply lines (41, 43) and that the control circuit is adapted to, upon detecting a power supply interruption as a result of the switching operation of the user-operated switch, switch the first switch (11) off; and
to, after switching the first switch off, switch the second switch.

2. Assembly according to claim 1, wherein the control module (10) is adapted to communicate wirelessly and/or to be part of a wireless network; and/or the control module (10) is adapted to store data with respect to the energy consumption of the electrical load (30); and/or the control module (10) is adapted to measure the energy consumption of the electrical load (30).

3. Assembly according to any of the previous claims, wherein the power supply restoration module (20) is intended to be provided at a distance from the control module (10), whereby both modules (10, 20) are provided as separate modules.

4. Assembly according to claim 3, wherein the control circuit (13) comprises a first circuit (12) which is incorporated in the control module (10) and which is adapted to detect a power supply interruption in the set of power supply lines (41, 43) and to, upon detection of a power supply interruption, switch the first switch (11).

5. Assembly according to claim 3 or 4, wherein the control circuit (13) comprises a second circuit (22) which is incorporated in the power supply restoration module (20) and which is adapted to detect a power supply interruption in the set of power supply lines (41, 43) and to, upon detection of a power supply interruption, switch the second switch (21).

6. Assembly according to claim 5, wherein the second circuit (22) is adapted to work together with the user-operated switch (50, 51, 52) for causing a switching operation of the second switch (21) when switching the user-operated switch (50, 51, 52).

7. Assembly according to claim 1 or 2, wherein the control module (10) and the power supply restoration module (20) are incorporated in one control-restoration module (110).

8. Assembly according to any of the previous claims, wherein the user-operated switch (50, 51, 52) is part of an existing button for switching the electrical load (30) on or off.

9. Assembly according to any of the previous claims, wherein the control circuit (13) comprises a power supply interruption-detection circuit (23) adapted to detect a power supply interruption in the set of power supply lines (41, 43) and a control (24) adapted to, upon detecting a power supply interruption, switch the first switch (11) and to, after switching the first switch (11), switch the second switch (21).

10. Use of a control module (10) in an assembly according to any of claims 1 to 9,
wherein the control module (10) comprises a first switch (11) provided in a power
supply line of the set of power supply lines (41, 43) between the electrical load (30) and the branch point (A) for providing power supply to the control module (10).

11. Use of a control module (10) in an assembly according to claim 10, wherein the control module (10) furthermore comprises a first circuit (12) which is incorporated in a control circuit (13) and which is adapted to detect a power supply interruption in the set of power supply lines (41, 43) and to, upon detection of a power supply interruption as a result of the switching operation of the user-operated switch, switch the first switch (11) off.

12. Use of a power supply restoration module (20) in an assembly according to any of claims 1-9, wherein the power supply restoration module (20) comprises a second switch (21) provided in the set of power supply lines (41, 43) for providing power supply to the control module (10), and wherein the power supply restoration module (20) further comprises a second circuit (22) which is incorporated in the control circuit (13) and which is adapted to detect a power supply interruption in the set of power supply lines (41, 43) and to, upon detection of a power supply interruption as a result of a switching operation of a user-operated switch (50, 51, 52) in the set of power supply lines (41, 43), switch the first switch (11) off; and to, after switching the first switch off, switch the second switch (21).

13. Electrical installation comprising:
- a set of power supply lines (41, 43) running towards an electrical load (30),
- one or more user-operated switches (50, 51, 52) in the set of power supply lines (41, 43); and
- an assembly according to any of claims 1-9.

## Patentansprüche

1. Anordnung zum Hinzufügen mindestens einer Funktionalität zu einer elektrischen Last (30), wobei die Anordnung umfasst:
- ein Steuermodul (10), das angepasst ist, um eine Funktionalität zu der elektrischen Last (30) hinzuzufügen, wobei das Steuermodul (10) einen ersten Schalter (11) umfasst, der zwischen der elektrischen Last (30) und einem Verzweigungspunkt (A) bereitgestellt ist, wobei der Verzweigungspunkt (A) zum Verbinden mit einem Satz von Stromversorgungsleitungen (41, 43) zum Bereitstellen einer Stromversorgung für das Steuermodul (10) und die elektrische Last (30) vorgesehen ist;
- ein Wiederherstellungsmodul (20) für die Stromversorgung, das konfiguriert ist, um die Stromversorgung des Steuermoduls (10) im Falle einer Unterbrechung der Stromversorgung infolge eines Schaltvorgangs eines benutzergesteuerten Schalters (50, 51, 52) in dem Satz von Stromversorgungsleitungen (41, 43) in Richtung der elektrischen Last (30) wiederherzustellen; und
- eine Steuerschaltung (13), die konfiguriert ist, um eine Unterbrechung der Stromversorgung in dem Satz von Stromversorgungsleitungen (41, 43) zu erfassen,
**dadurch gekennzeichnet, dass** das Wiederherstellungsmodul (20) einen zweiten Schalter (21) umfasst, der in dem Satz von Stromversorgungsleitungen (41, 43) bereitgestellt ist, und dass die Steuerschaltung angepasst ist, um beim Erfassen einer Unterbrechung der Stromversorgung infolge des Schaltvorgangs des benutzergesteuerten Schalters den ersten Schalter (11) auszuschalten; und um nach dem Ausschalten des ersten Schalters den zweiten Schalter umzuschalten.

2. Anordnung nach Anspruch 1, wobei das Steuermodul (10) angepasst ist, um drahtlos zu kommunizieren und/oder Teil eines drahtlosen Netzwerks zu sein; und/oder das Steuermodul (10) angepasst ist, um Daten in Bezug auf den Energieverbrauch der elektrischen Last (30) zu speichern; und/oder das Steuermodul (10) angepasst ist, um den Energieverbrauch der elektrischen Last (30) zu messen.

3. Anordnung nach einem der vorangehenden Ansprüche, wobei das Wiederherstellungsmodul (20) für die Stromversorgung vorgesehen ist, um in einem Abstand von dem Steuermodul (10) bereitgestellt zu werden, wobei beide Module (10, 20) als separate Module bereitgestellt sind.

4. Anordnung nach Anspruch 3, wobei die Steuerschaltung (13) eine erste Schaltung (12) umfasst, die in dem Steuermodul (10) integriert ist und die angepasst ist, um eine Unterbrechung der Stromversorgung in dem Satz von Stromversorgungsleitungen (41, 43) zu erfassen und beim Erfassen einer Unterbrechung der Stromversorgung den ersten Schalter (11) umzuschalten.

5. Anordnung nach Anspruch 3 oder 4, wobei die Steuerschaltung (13) eine zweite Schaltung (22) umfasst, die in dem Wiederherstellungsmodul (20) für die Stromversorgung integriert ist und die angepasst ist, um eine Unterbrechung der Stromversorgung in dem Satz von Stromversorgungsleitungen (41, 43) zu erfassen und beim Erfassen einer Unterbrechung der Stromversorgung den zweiten Schalter (21) umzuschalten.

6. Anordnung nach Anspruch 5, wobei die zweite Schaltung (22) angepasst ist, um mit dem benutzergesteuerten Schalter (50, 51, 52) zusammenzuwirken, um beim Schalten des benutzergesteuerten Schalters (50, 51, 52) einen Schaltvorgang des zweiten Schalters (21) zu bewirken.

7. Anordnung nach Anspruch 1 oder 2, wobei das Steuermodul (10) und das Wiederherstellungsmodul (20) für die Stromversorgung in einem Steuer-Wiederherstellungsmodul (110) integriert sind.

8. Anordnung nach einem der vorangehenden Ansprüche, wobei der benutzergesteuerte Schalter (50, 51, 52) Teil eines vorhandenen Knopfes zum Ein- oder Ausschalten der elektrischen Last (30) ist.

9. Anordnung nach einem der vorangehenden Ansprüche, wobei die Steuerschaltung (13) eine Unterbrechungserfassungsschaltung (23) für die Stromversorgung zum Erfassen einer Unterbrechung der Stromversorgung in dem Satz von Stromversorgungsleitungen (41, 43) und eine Steuerung (24) zum Umschalten des ersten Schalters (11) bei Erfassen einer Unterbrechung der Stromversorgung und zum Umschalten des zweiten Schalters (21) nach dem Umschalten des ersten Schalters (11) umfasst.

10. Verwendung eines Steuermoduls (10) in einer Anordnung nach einem der Ansprüche 1 bis 9, wobei das Steuermodul (10) einen ersten Schalter (11) umfasst, der in einer Stromversorgungsleitung des Satzes von Stromversorgungsleitungen (41, 43) zwischen der elektrischen Last (30) und dem Verzweigungspunkt (A) bereitgestellt ist, um dem Steuermodul (10) eine Stromversorgung bereitzustellen.

11. Verwendung eines Steuermoduls (10) in einer Anordnung nach Anspruch 10, wobei das Steuermodul (10) ferner eine erste Schaltung (12) umfasst, die in einer Steuerschaltung (13) integriert ist und die angepasst ist, um eine Unterbrechung der Stromversorgung in dem Satz von Stromversorgungsleitungen (41, 43) zu erfassen und beim Erfassen einer Unterbrechung der Stromversorgung infolge des Schaltvorgangs des benutzergesteuerten Schalters den ersten Schalter (11) auszuschalten.

12. Verwendung eines Wiederherstellungsmoduls (20) für die Stromversorgung in einer Anordnung nach einem der Ansprüche 1 bis 9, wobei das Wiederherstellungsmodul (20) für die Stromversorgung einen zweiten Schalter (21) umfasst, der in dem Satz von Stromversorgungsleitungen (41, 43) zum Bereitstellen der Stromversorgung für das Steuermodul (10) bereitgestellt ist, und wobei das Wiederherstellungsmodul (20) für die Stromversorgung ferner eine zweite Schaltung (22) umfasst, die in der Steuerschaltung (13) integriert ist und die angepasst ist, um eine Unterbrechung der Stromversorgung in dem Satz von Stromversorgungsleitungen (41, 43) zu erfassen und beim Erfassen einer Unterbrechung der Stromversorgung infolge eines Schaltvorgangs eines benutzergesteuerten Schalters (50, 51, 52) in dem Satz von Stromversorgungsleitungen (41, 43) den ersten Schalter (11) auszuschalten; und nach dem Ausschalten des ersten Schalters den zweiten Schalter (21) umzuschalten.

13. Elektrische Installation, umfassend:
- einen Satz von Stromversorgungsleitungen (41, 43), die zu einer elektrischen Last (30) hinlaufen,
- einen oder mehrere benutzergesteuerte Schalter (50, 51, 52) im Satz von Stromversorgungsleitungen (41, 43); und
- eine Anordnung nach einem der Ansprüche 1 bis 9.

## Revendications

1. Montage pour ajouter au moins une fonctionnalité à une charge électrique (30), le montage comprenant :
- un module de commande (10) adapté pour ajouter une fonctionnalité à la charge électrique (30), le module de commande (10) comprenant un premier interrupteur (11) prévu entre la charge électrique (30) et un point de branchement (A), le point de branchement (A) étant prévu pour être connecté à un ensemble de lignes d'alimentation électrique (41, 43) pour fournir une alimentation électrique au module de commande (10) et à la charge électrique (30) ;
- un module de restauration de l'alimentation électrique (20) configuré pour rétablir l'alimentation électrique du module de commande (10) en cas d'interruption de l'alimentation électrique résultant d'une opération de commutation d'un interrupteur actionné par l'utilisateur (50, 51, 52) dans l'ensemble de lignes d'alimentation électrique (41, 43) en direction de la charge électrique (30) ; et
- un circuit de commande (13) configuré pour détecter une interruption d'alimentation en énergie dans l'ensemble de lignes d'alimentation électrique (41, 43),
**caractérisé en ce que** le module de restauration de l'alimentation électrique (20) comprend un second interrupteur (21) prévu dans l'ensemble de lignes d'alimentation électrique (41, 43) et que le circuit de commande est adapté pour couper le premier interrupteur (11) lors de la commutation de l'interrupteur actionné par l'utilisateur ; et pour
couper le second interrupteur après avoir coupé le premier interrupteur.

2. Montage selon la revendication 1, dans lequel le module de commande (10) est adapté pour communiquer sans fil et/ou faire partie d'un réseau sans fil ; et/ou le module de commande (10) est adapté pour stocker des données concernant la consommation d'énergie de la charge électrique (30) ; et/ou le module de commande (10) est adapté pour mesurer la consommation d'énergie de la charge électrique (30).

3. Montage selon l'une des revendications précédentes, dans lequel le module de restauration de l'alimentation électrique (20) est prévu à distance du module de commande (10), les deux modules (10, 20) étant prévus comme modules séparés.

4. Montage selon la revendication 3, dans lequel le circuit de commande (13) comprend un premier circuit (12) qui est intégré dans le module de commande (10) et qui est adapté pour détecter une interruption de l'alimentation électrique dans l'ensemble de lignes d'alimentation électrique (41, 43) et pour couper (11) lors de la détection d'une interruption de l'alimentation électrique.

5. Montage selon la revendication 3 ou 4, dans lequel le circuit de commande (13) comprend un deuxième circuit (22) qui est intégré dans le module de restauration de l'alimentation électrique (20) et qui est adapté pour détecter une interruption de l'alimentation électrique dans l'ensemble de lignes d'alimentation électrique (41, 43) et, en cas de la détection d'une interruption de l'alimentation électrique, commuter le second interrupteur (21).

6. Montage selon la revendication 5, dans lequel le deuxième circuit (22) est adapté pour fonctionner grâce à l'interrupteur actionné par l'utilisateur (50, 51, 52) pour déclencher une opération de commutation du second interrupteur (21) lors d'une commutation de l'interrupteur (50, 51, 52) actionné par l'utilisateur.

7. Montage selon la revendication 1 ou 2, dans lequel le module de commande (10) et le module de restauration de l'alimentation électrique (20) sont intégrés dans un module de commande/restauration (110).

8. Montage selon l'une des revendications précédentes, dans lequel l'interrupteur actionné par l'utilisateur (50, 51, 52) fait partie d'un bouton existant destiné à activer ou à désactiver la charge électrique (30).

9. Montage selon l'une des revendications précédentes, dans lequel le circuit de commande (13) comprend un circuit de détection d'interruption de l'alimentation électrique (23) adapté pour détecter une interruption de l'alimentation électrique dans l'ensemble de lignes d'alimentation électrique (41, 43) et une commande (24) adaptée pour commuter le premier interrupteur (11) lors de la détection d'une interruption de l'alimentation électrique et pour commuter le second interrupteur (21) après la commutation du premier interrupteur (11).

10. Utilisation d'un module de commande (10) dans un montage selon l'une des revendications 1 à 9, dans laquelle le module de commande (10) comprend un premier interrupteur (11) prévu dans une ligne d'alimentation électrique de l'ensemble de lignes d'alimentation électrique (41, 43) entre la charge électrique (30) et le point de branchement (A) pour fournir une alimentation électrique au module de commande (10).

11. Utilisation d'un module de commande (10) dans un montage selon la revendication 10, dans laquelle le module de commande (10) comprend en outre un premier circuit (12) qui est intégré dans un circuit de commande (13) et qui est adapté pour détecter une interruption de l'alimentation électrique dans l'ensemble de lignes d'alimentation électrique (41, 43) et pour couper le premier commutateur (11) en cas de la détection d'une interruption de l'alimentation électrique résultant de l'opération de commutation du commutateur actionné par l'utilisateur.

12. Utilisation d'un module de restauration de l'alimentation électrique (20) dans un montage selon l'une des revendications 1 à 9, dans laquelle le module de restauration de l'alimentation électrique (20) comprend un second commutateur (21) prévu dans l'ensemble de lignes d'alimentation électrique (41, 43) pour fournir de l'alimentation électrique au module de commande (10) et dans laquelle le module de restauration de l'alimentation électrique (20) comprend en outre un second circuit (22) qui est intégré dans le circuit de commande (13) et qui est adapté pour détecter une interruption de l'alimentation électrique dans l'ensemble de lignes d'alimentation électrique (41, 43) et pour couper le premier interrupteur (11) lors de la détection d'une interruption de l'alimentation électrique résultant d'une opération de commutation d'un interrupteur actionné par l'utilisateur (50, 51, 52) dans l'ensemble de lignes d'alimentation électrique (41, 43) ; et pour commuter le second interrupteur (21) après avoir coupé le premier interrupteur.

13. Installation électrique comprenant :
- un ensemble de lignes d'alimentation électrique (41, 43) s'acheminant vers une charge électrique (30),
- un ou plusieurs commutateur(s) (50, 51, 52) actionné(s) par l'utilisateur dans l'ensemble de lignes d'alimentation électrique (41, 43) ; et
- un montage selon l'une des revendications 1 à 9.
